# EUROPÄISCHE PATENTANMELDUNG

(11) **EP 1 229 173 A1**
(43) Veröffentlichungstag der Anmeldung: **07.08.2002**
(21) Anmeldenummer: 01102529.3
(22) Anmeldetag: 06.02.2001
(51) Int. Cl.: E02D 29/14, F16L 55/115

(54) **Verschlussvorrichtung für Rohrleitungen, insbesondere Schachtrohre**

(71) Anmelder: Kortmann, Karl, 48465 Schüttorf (DE)
(72) Erfinder: Kortmann, Karl, 48465 Schüttorf (DE)
(74) Vertreter: Busse & Busse Patentanwälte

(57) **Zusammenfassung**

Eine Verschlußvorrichtung für Rohrleitungen, insbesondere Schachtrohre (2) einer Kanalisation o. dgl., ist mit einer in Schließstellung den Rohrquerschnitt übergreifenden und unterseitig einen in das Schachtrohr (2) eingreifenden Steckansatz (3) aufweisenden Abdeckkappe (4) versehen, die durch zumindest einen zwischen dieser und dem Schachtrohr (2) vorgesehenen Verbinder (5) in einer Sicherungsstellung gehalten ist. Der Verbinder (5) ist erfindungsgemäß als ein an einem Führungsansatz (7) an der Unterseite der Abdeckkappe (4) anliegender Klemmkörper (6) ausgebildet, der durch ein Stellmittel (8) zur Innenseite (9) des Schachtrohres (2) hin in eine Anlagestellung verlagerbar ist. Der Klemmkörper (6) und zusätzlich ein Teilbereich (B) des in Eingriffsstellung befindlichen Steckansatzes (3) bilden dabei eine gemeinsame Klemmverbindung der Abdeckkappe (4) am Schachtrohr (2) aus.

## Beschreibung

Die Erfindung betrifft eine Verschlußvorrichtung für Rohrleitungen, insbesondere Schachtrohre einer Kanalisation oder dgl., gemäß dem Oberbegriff des Anspruchs 1.

Bekannte Verschlußvorrichtungen für Rohrleitungen sind mit einer in Schließstellung den Rohrquerschnitt übergreifenden Abdeckkappe mit unterseitigem Steckansatz versehen, der in das Schachtrohr eingreift. Die Abdeckplatte wird dabei durch einen zusätzlichen Verbinder, beispielsweise eine die Bauteile durchgreifende Halteschraube, in der Einbaulage gesichert. Derartige Verschlußvorrichtungen sind aufwendig und erfüllen im Bereich von kindersicher zu verschließenden Rohrleitungen die hohen Sicherheitsanforderungen nur ungenügend.

Die Erfindung befaßt sich mit dem Problem, eine Verschlußvorrichtung für Rohrleitungen zu schaffen, deren mit geringem technischem Aufwand herstellbare Abdeckkappe bei einfacher Montage einen kindersicheren Verschluß von Schachtrohren oder dgl. Leitungsbauteilen ermöglicht.

Die Erfindung löst dieses Problem mit einer Verschlußvorrichtung mit den Merkmalen des Anspruchs 1. Hinsichtlich wesentlicher weiterer Ausgestaltungen der erfindungsgemäßen Verschlußvorrichtung wird auf die Ansprüche 2 bis 10 verwiesen.

Die erfindungsgemäße Verschlußvorrichtung ist mit einer Abdeckkappe versehen, an deren Unterseite ein durch ein Stellmittel gehaltener und durch dessen Betätigung zur Innenseite des Schachtrohres hin in eine Anlagestellung verlagerbarer Klemmkörper vorgesehen ist. Bei dessen Verstellung in eine Klemmposition am Schachtrohr wird zunächst die Abdeckkappe mit ihrem dem Klemmkörper gegenüberliegenden Teilbereich des Steckansatzes am Schachtrohr zur Anlage gebracht und danach erfolgt die vollständige Verklemmung der Bauteile. Dabei sind am oberen Randbereich des Schachtrohres zur Abdeckkappe hin jeweilige Spannzonen gebildet, die ein einseitiges Kippen und Abheben der Abdeckkappe vom Schachtrohr zuverlässig verhindern.

Die Klemmwirkung der im Nahbereich des Klemmkörpers befindlichen Spannzone wird durch jeweilige randseitig an der Abdeckkappe vorgesehene und an der Außenseite des Schachtrohres anlegbare Gegenlager unterstützt. Diese sind zum Klemmkörper hin so angeordnet, daß der obere Randbereich des Schachtrohres von einer nach Art eines Klemmkanals wirksamen Verbindungskontur übergriffen wird. In einer ersten Phase bei der Verstellung des Klemmkörpers wird die Abdeckkappe auf der dem Klemmkörper gegenüberliegenden Seite zuerst in Anlagestellung gebracht und in einer zweiten Stellphase bei Weiterbewegung des Klemmkörpers wird eine Verengung des Klemmkanals erreicht, so daß zwischen den hier aneinanderliegenden Teilen eine zweite Spannzone wirksam wird. Damit ist die Abdeckkappe durch einen kraft- und formschlüssigen Verbindungseingriff so fixiert, daß ein Lösen dieser Klemmverbindung mit zwei gegenüberliegenden Spannzonen nur durch geübte Fachkräfte ausführbar ist und die Verschlußvorrichtung insbesondere gegen ungewolltes Öffnen durch Kinder gesichert wird.

Weitere Einzelheiten und vorteilhafte Wirkungen der Erfindung ergeben sich aus der nachfolgenden Beschreibung und den Zeichnungen, die ein Ausführungsbeispiel der erfindungsgemäßen Verschlußvorrichtung veranschaulichen. In der Zeichnung zeigen:
- Fig. 1: eine Schnittdarstellung der Verschlußvorrichtung gemäß einer Linie I-I in Fig. 2, und
- Fig. 2: eine teilweise geschnittene Unteransicht der Verschlußvorrichtung in Einbaulage auf einem Schachtrohr.

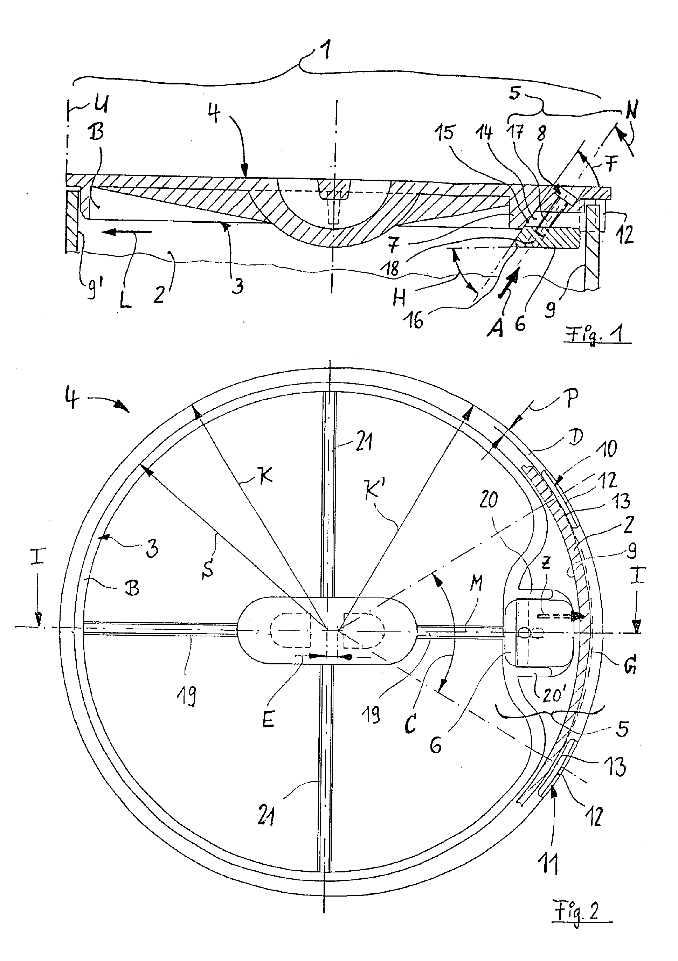

In Fig. 1 ist eine insgesamt mit 1 bezeichnete Verschlußvorrichtung für ein Schachtrohr 2 einer Kanalisation o. dgl. dargestellt. Die Verschlußvorrichtung 1 ist mit einer in der dargestellten Schließstellung den Rohrquerschnitt übergreifenden und unterseitig einen in das Schachtrohr 2 eingreifenden Steckansatz 3 aufweisenden Abdeckkappe 4 versehen. Die Abdeckkappe 4 ist durch zumindest einen zwischen dieser und dem Schachtrohr 2 vorgesehenen Verbinder 5 in einer Sicherungsstellung gehalten.

Die erfindungsgemäß ausgeführte Abdeckkappe 4 weist als Verbinder 5 einen Klemmkörper 6 auf, der an einem Führungsansatz 7 an der Unterseite der Abdeckkappe 4 anliegt und durch ein Stellmittel 8 zur Innenseite des Schachtrohres 2 hin in eine Anlagestellung verlagerbar ist (Bewegungsrichtung des Klemmkörpers 6: Pfeil A).

Die Unteransicht der Abdeckkappe 4 gemäß Fig. 2 verdeutlicht, daß der Steckansatz 3 auf der dem Verbinder 5 gegenüberliegenden Seite der Abdeckkappe 4 als konzentrisch zu einem Konturradius K der Abdeckkappe 4 mit einem Radius S verlaufender, bogenförmiger Teilbereich B ausgebildet ist. Dieser bogenförmige Teilbereich B kann im wesentlichen kreisförmig erweitert sein und erstreckt sich mit konstantem Radius S bis in den Nahbereich des Klemmkörpers 6 (Fig. 2, rechte Bildseite).

In der dargestellten Einbaulage wird der Klemmkörper 6 bei seiner Höhenverlagerung in Pfeilrichtung A in einer ersten Verbindungsphase zur Innenseite 9 des Schachtrohres 2 hin bewegt und bei Fortsetzung dieser Bewegung wird die Abdeckkappe 4 zunächst nach links verlagert(Pfeil L, Fig. 1) und der Bogenbereich B des Steckansatzes 3 gelangt im Bereich der Innenseite 9' in Anlagestellung am Schachtrohr 2. Bei Fortsetzung der Stellbewegung gemäß Pfeil A bilden der Klemmkörper 6 an der Innenseite 9 und der Teilbereich B des in Eingriffsstellung befindlichen Steckansatzes 3 nunmehr eine gemeinsame Klemmverbindung aus, die zumindest zwei gegenüberliegende, die Teile form- und kraftschlüssig fixierende Klemmzonen aufweist. Diese Klemmverbindung ist ohne eine Entriegelung des Stellmittels 8 nicht lösbar, so daß damit eine zuverlässige Kindersicherung im Bereich derartiger Schachtrohre 2 erreicht ist.

In der Klemmzone des Bogens B bei 9' schließt der Konturradius K der Abdeckkappe 4 mit dem Außendurchmesser des Schachtrohres 2 ohne Überstand ab (Fig. 1, linke Seite, Ebene U), so daß in dieser Spannzone ein Untergreifen der Abdeckkappe 4 und deren Lösen aus der Einbaulage durch eine Hebelwirkung verhindert ist. Ebenso ist denkbar, daß der Steckansatz 3 einen in dieser Klemmzone radial vorstehenden Formansatz (nicht dargestellt) aufweist, der in eine am oberen Randbereich des Schachtrohres 2 vorgesehene, ebenfalls nicht dargestellte Aufnahmeöffnung einrastbar ist. Mit dieser formschlüssigen Verbindung ist ein zusätzlicher Sicherungseingriff gebildet.

In vorteilhafter Ausführung ist die Abdeckkappe 4 im Nahbereich des Klemmkörpers 6 (Fig. 2) mit zumindest einem, in Einbaulage außenseitig am Schachtrohr 2 als Gegenlager anlegbaren Stützprofilteil 10 und/oder 11 versehen. In der dargestellten Ausführungsform sind zwei Stützprofilteile 10 und 11 vorgesehen, die in einem Bogenabstand C symmetrisch zur Mittelebene M des Klemmkörpers 6 angeordnet sind.

Die Stützprofilteile 10 und 11 sind in zweckmäßiger Ausführung einstückig mit der Abdeckkappe 4 geformt, wobei diese mit einem deren Umrißkontur (Mittelradius K) erweiternden und einen Bogenradius K' aufweisenden Bogenansatz D versehen ist. Der Konturradius K' ist dabei mit dem gleichen Radienmaß wie der Konturradius K ausgeführt, wobei diese beiden Radien jedoch um einen Abstand E zur Seite des Klemmkörpers 6 hin verlagerte Mittelpunkte aufweisen und damit eine sichelförmige Kontur des Bogenansatzes D erreicht wird. Die beiden Stützprofilteile 10 und 11 sind als einstückige Teile auf dem Ansatz D mit einer entsprechenden Wandungsdicke P geformt.

Die Stüzprofilteile 10 und 11 sind als jeweilige Formstege 12 ausgebildet, die mit einer bogenförmig verlaufenden Anlagefläche 13 außenseitig am Schachtrohr 2 abstützbar sind (Fig. 2). Mit der Anordnung der beiden Stützprofilteile 10 und 11 in einem an unterschiedliche Durchmesser des Schachtrohres 2 anpaßbaren Bogenabstand C ist zwischen diesen beiden Gegenlagern ein radialer Freiraum gebildet. Bei Anlage des Klemmkörpers 6 in seiner Pressstellung (Pfeil Z, Fig. 2) am Schachtrohr 2 kann dieses bereichsweise eine durch eine Strichlinie G dargestellte elastische Deformation erfahren, so daß damit die Klemmwirkung in dieser Klemmzone verstärkt wird.

Der Führungsansatz 7 des Klemmkörpers 6 ist mit einem einstückig mit dem bogenförmigen Steckansatz 3 (Fig. 2, rechte Seite) geformten Aufnahmeraum 14 versehen, der in radialer Richtung U-förmig angeordnete Seitenwandungen 20, 20' aufweist, die einstückig mit dem Führungsansatz 7 geformt sind. Die innenseitige Basiswandung des Führungsansatzes 7 weist eine nach außen geneigte (Neigungswinkel F) Führungsfläche 15 auf, an der der Klemmkörper 6 mit einem einen Keilwinkel H aufweisenden Führungskeil 16 anliegt. Bei Bewegung in Pfeilrichtung A wird der Klemmkörper 6 durch diese flächige Anlage geführt und abgestützt, wobei auch hohe Klemmkräfte (Pfeil Z) ohne Deformation der Abdeckkappe 4 aufgenommen werden.

Als Stellmittel 8 weist der Klemmkörper 6 eine durch eine Bohrung in den Aufnahmeraum 14 eingreifende Stellschraube 17 auf, die mit einer dem Neigungswinkel F der Führungsfläche 15 bzw. dem Keilwinkel H des Führungskeils 16 entsprechenden Schrägstellung N (Fig. 1) angeordnet ist und in eine Gewindebohrung 18 des Klemmkeils 6 eingreift. Der Neigungswinkel N beträgt dabei 50° bis 60°, vorzugsweise 56°, so daß eine optimale Stellbewegung des Klemmkeils 6 möglich ist. Für die Lagesicherung der Abdeckkappe 4 ist lediglich die eine Stellschraube 17 erforderlich, die ohne Gewindeteile in der Abdeckkappe 4 oder dem Schachtrohr 2 funktionssicher mit dem Klemmkörper 6 verbunden ist. Die Einzelteile dieser Verschlußvorrichtung 1 sind insgesamt mit geringem Aufwand herstellbar.

An der Unterseite der Abdeckkappe 4 sind zwei sich mit einem Winkel von 90° kreuzende Stabilisierungsstege 19 und 21 vorgesehen, die in den im wesentlichen kreisförmig geschlossenen Steckansatz 3 so integriert sind, daß die Abdeckkappe 4 in der vorbeschriebenen Klemmstellung optimal ausgesteift ist und Klemmkräfte deformationsfrei in den Spannzonen aufnehmen kann.

An Stelle des dargestellten Schachtrohres 2 mit kreisförmiger Umfangskontur kann auch ein Kanalisationsteil mit recheckigem Querschnitt vorgesehen sein (nicht dargestellt), das zur Aufnahme der entsprechenden Abdeckkappe 4 einen an diese angepaßten Tragrahmen aufweist. Denkbar ist eine derartige Konstruktion für Ablaufschächte von Fahrbahnen, bei denen als Abdeckung ein Einlaufrost vorgesehen ist. Mit der vorbeschriebenen Klemmvorrichtung können derartige Roste durch den nur eine Stellschraube 17 aufweisenden Klemmkörper 6 in den beiden Klemmzonen so fixiert werden, daß insbesondere auch die Sicherheitsanforderungen auf Brücken und im Bereich öffentlicher Anlagen, beispielsweise Fußballstadien, erfüllt werden und eine Entnahme von Abdeckteilen, Gullideckeln o. dgl. durch Randalierer zuverlässig verhindert ist.

Mit der erfindungsgemäßen Doppelklemmung des Abdeckteils 4 können auch die Anforderungen an die Lagesicherung von im Straßenbau im Bereich des Schwerlastverkehrs eingesetzten Bauteilen erfüllt werden, da mit der konstruktiv einfachen und stabilen Klemmverbindung eine Geräuschbelastung durch aneinanderschlagende Einzelbauteile der Verschlußvorrichtung vermieden ist.

## Patentansprüche

1. Verschlußvorrichtung für Rohrleitungen, insbesondere Schachtrohre (2) einer Kanalisation o. dgl., mit einer in Schließstellung den Rohrquerschnitt übergreifenden und unterseitig einen in das Schachtrohr (2) eingreifenden Steckansatz (3) aufweisenden Abdeckkappe (4), die durch zumindest einen zwischen dieser und dem Schachtrohr (2) vorgesehenen Verbinder (5) in einer Sicherungsstellung gehalten ist, **dadurch gekennzeichnet, daß** der Verbinder (5) als ein an einem Führungsansatz (7) an der Unterseite der Abedeckkappe (4) anliegender Klemmkörper (6) ausgebildet ist, der durch ein Stellmittel (8) zur Innenseite (9) des Schachtrohres (2) hin in eine Anlagestellung verlagerbar ist, derart, daß der Klemmkörper (6) und zusätzlich ein Teilbereich (B) des in Eingriffsstellung befindlichen Steckansatzes (3) eine gemeinsame Klemmverbindung der Abdeckkappe (4) am Schachtrohr (2) bilden.

2. Verschlußvorrichtung nach Anspruch 1, **dadurch gekennzeichnet, daß** der einerseits am Schachtrohr (2) anliegende Klemmkörper (6) mit dem gegenüberliegenden und im wesentlichen kreisbogenförmig verlaufenden Teilbereich (B) des Steckansatzes (3) die Klemmverbindung mit zwei Klemmzonen bildet.

3. Verschlußvorrichtung nach Anspruch 1 oder 2, **dadurch gekennzeichnet, daß** die Abdeckkappe (4) im Nahbereich des Klemmkörpers (6) mit zumindest einem außenseitig am Schachtrohr (2) als Gegenlager anlegbaren Stützprofilteil (10, 11) versehen ist.

4. Verschlußvorrichtung nach einem der Ansprüche 1 bis 3, **dadurch gekennzeichnet, daß** die Abdeckkappe (4) im Nahbereich des Klemmkörpers (6) zwei symmetrisch zu dessen Mittelebene (M) angeordnete Stützprofilteile (10 und 11) aufweist.

5. Verschlußvorrichtung nach Anspruch 3 oder 4, **dadurch gekennzeichnet, daß** als Stützprofilteil (10, 11) jeweilige Formstege (12) vorgesehen sind, die mit einer bogenförmig verlaufenden Anlagefläche (13) am Schachtrohr (2) abstützbar sind.

6. Verschlußvorrichtung nach Anspruch 3 bis 5, **dadurch gekennzeichnet, daß** die Stützprofilteile (10, 11) einstückig mit einem die Umrißkontur (K) der Abdeckkappe (4) erweiternden Bogenansatz (D) geformt sind.

7. Verschlußvorrichtung nach einem der Ansprüche 3 bis 6, **dadurch gekennzeichnet, daß** zwischen den Stützprofilteilen (10, 11) ein bei Anlage des Klemmkörpers (6) am Schachtrohr (2) dessen Deformationen (D) aufnehmender Freiraum gebildet ist.

8. Verschlußvorrichtung nach einem der Ansprüche 1 bis 7, **dadurch gekennzeichnet, daß** der Führungsansatz (7) des Klemmkörpers (6) einen einstückig mit dem Steckansatz (3) der Abdeckkappe (4) geformten und in radialer Richtung U-förmig offenen Aufnahmeraum (14) bildet, dessen innenseitige Basiswandung eine nach außen geneigte und mit einem Führungskeil (16) des Klemmkörpers (6) zusammenwirkende Führungsfläche (15) aufweist.

9. Verschlußvorrichtung nach einem der Ansprüche 1 bis 7, **dadurch gekennzeichnet, daß** der Klemmkörper (6) als Stellmittel (8) eine von oben in den Aufnahmeraum (14) eingreifende Stellschraube (17) aufweist, die mit einer dem Neigungswinkel (H) des Führungskeils (16) entsprechenden Schrägstellung (N) in eine Gewindebohrung (18) des Klemmkeils (6) eingreift.

10. Verschlußvorrichtung nach einem der Ansprüche 1 bis 9, **dadurch gekennzeichnet, daß** in den im wesentlichen kreisförmig geschlossenen Steckansatz (3) der Abdeckkappe (4) zwei sich mit einem Winkel von 90° kreuzende Stabilisierungsstege (19, 21) integriert sind.
